# EUROPEAN PATENT APPLICATION

(11) **EP 3 744 564 A1**
(43) Date of publication of application: **02.12.2020**
(21) Application number: 19912861.2
(22) Date of filing: 22.11.2019
(51) Int. Cl.: B60M 3/00, B60L 9/00, B60L 53/00, B61C 3/02

(54) **MOTOR TRAIN UNIT EMERGENCY TRACTION SYSTEM**

(30) Priority: 29.01.2019 CN 201910086123
(71) Applicant: CRRC Changchun Railway Vehicles Co., Ltd., Changchun, Jilin 130000 (CN)
(72) Inventor: DENG, Hai, Jilin 130000 (CN); SHEN, Di, Jilin 130000 (CN); CHEN, Tianyu, Jilin 130000 (CN); LI, Lingyu, Jilin 130000 (CN); ZHAO, Yue, Jilin 130000 (CN); YANG, Shu, Jilin 130000 (CN)
(74) Representative: Behr, Wolfgang
(86) International application number: PCT/CN2019/120243
(87) International publication number: WO 2020/155804

(57) **Abstract**

A motor train unit emergency traction system, comprising a traction converter (100). A power source input end of the traction converter (100) is connected to a power grid, a first output end is connected to a driving traction motor of a motor train, and a second output end is connected to a first end of a two-way alternating current-direct current converter (200) and an alternating current bus of the motor train; a second end of the two-way alternating current-direct current converter (200) is connected to a first storage battery pack (400) and an input end of a DC-DC converter (300); an output end of the DC-DC converter (300) is connected to a first direct current bus of the motor train; the first storage battery pack (400) is connected to a second direct current bus in the traction converter (100) by means of a third control switch K3. When a power supply fault occurs to the power grid, the motor train unit can perform emergency traction operation by using the first storage batteries (400).

## Description

This application claims the priority to Chinese Patent Application No. 201910086123.4, titled "SYSTEM FOR EMERGENCY TRACTION OF ELECTRIC MULTIPLE UNIT", filed on January 29, 2019, with the China National Intellectual Property Administration, the content of which is incorporated herein by reference.

### FIELD

The present disclosure relates to the technical field of electrical equipment, and particularly, to a system for emergency traction of an electric multiple unit (EMU).

### BACKGROUND

In conventional technology, an EMU uses high-voltage electricity in a power grid as a power source. When the power grid is off, the EMU will stop running without a power source.

How to ensure that the EMU can still run after the power grid is off has become one of technical problems to be solved by those skilled in the art.

### SUMMARY

In view of this, a system for emergency traction of an electric multiple unit (EMU) is provided by embodiments of the present disclosure, to realize the emergency traction of the EMU after a power grid is cut off.

In order to achieve the above purpose, the embodiments of the present disclosure provide following technical solutions.

A system for emergency traction of an EMU includes: a traction converter, a bidirectional alternating current to direct current (AC-DC) converter, a direct current to direct current (DC-DC)converter, a first storage battery pack, a first control switch, a second control switch, and a third control switch.

An power input terminal of the traction converter is connected with a power grid, a first output terminal of the traction converter is connected with a driving traction motor of the EMU, and a second output terminal of the traction converter is connected with a first terminal of the bidirectional AC-DC converter and an alternating current (AC) bus of the EMU.

A second terminal of the bidirectional AC-DC converter is connected with a power interface of the first storage battery pack and an input terminal of the DC-DC converter.

An output terminal of the DC-DC converter is connected with a first direct current (DC) bus of the EMU.

The power interface of the first storage battery pack is connected with a second DC bus in the traction converter through the third control switch.

The first control switch is arranged between the bidirectional AC-DC converter and the AC bus.

The second control switch is arranged between the first storage battery pack and the input terminal of the DC-DC converter.

The third control switch is arranged between the first storage battery pack and the second DC bus in the traction converter.

Preferably, the system for emergency traction of an EMU further includes: a switch controller.

The switch controller is configured to output a control signal matching an obtained switch control instruction to the first control switch, the second control switch, and the third control switch, where the control signal is used for controlling on-off states of the first control switch, the second control switch, and the third control switch.

Preferably, in the above system for emergency traction of an EMU, the switch controller is specifically configured to:
control the first control switch and the second control switch to turn on, and control the third control switch to turn off, in a case that the power grid is on;
determine, in a case that the power grid is off, whether a switch control instruction is obtained; if not, control the first control switch, the second control switch and the third control switch to turn off; determine an instruction identifier of the switch control instruction, in a case that the switch control instruction is obtained; keep the first control switch and the third control switch off, and switch the second control switch to an on-state, in a case that the instruction identifier of the switch control instruction is a first identifier; keep the third control switch off, and switch the first control switch and the second control switch to an on-state, in a case that the instruction identifier of the switch control instruction is a second identifier; and switch the first control switch, the second control switch, and the third control switch to an on-state, in a case that the instruction identifier of the switch control instruction is a third identifier.

Preferably, in the above system for emergency traction of an EMU, the switch controller is specifically configured to:
control the first control switch and the second control switch to turn on, and control the third control switch to turn off, in a case that the power grid is on;
determine, in a case that the power grid is off, whether a switch control instruction is obtained; if not, control the first control switch, the second control switch and the third control switch to turn off; and determine, in a case that the switch control instruction is obtained, a control switch corresponding to the switch control instruction, and control the corresponding control switch to turn on or off according to the switch control instruction.

Preferably, in the above system for emergency traction of an EMU, the switch controller is arranged at a control platform of the EMU

Preferably, the above system for emergency traction of an EMU further includes: a touch screen.

The touch screen is arranged at the control platform of the EMU, and is configured to send the switch control instruction to the switch controller.

Preferably, the above system for emergency traction of an EMU further includes a second storage battery pack, and a rated output voltage of the second storage battery pack is lower than a rated output voltage of the first storage battery pack.

Preferably, in the above system for emergency traction of an EMU, the rated voltage of the first storage battery pack is 635V DC, and the rated voltage of the second storage battery pack is 110VDC.

Based on the above technical solutions provided by the embodiments of the present disclosure, when the power grid is off or electric energy cannot be collected from the power grid due to other faults and there is a traction demand for the EMU, the first storage battery pack is controlled to discharge by controlling the on-off states of the first control switch, the second control switch and the third control switch, to supply power to the first DC bus through the DC-DC converter and to the AC bus through the bidirectional AC-DC converter. At the same time, the first storage battery pack also releases electric energy to the second DC bus of the traction converter through the third control switch to supply power to the driving traction motor through the traction converter. It can be seen that in the technical solutions disclosed in the embodiments of the present disclosure, when the power supply of the power grid fails, emergency operation of the EMU is guaranteed.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
Figure 1 illustrates a structural schematic of a system for emergency traction of an EMU according to an embodiment of the present disclosure;
Figure 2 illustrates a structural schematic of a system for emergency traction of an EMU according to another embodiment of the present disclosure;
Figure 3 illustrates an operation status schematic of the system for emergency traction of an EMU according to another embodiment of the present disclosure;
Figure 4 illustrates an operation status schematic of the system for emergency traction of an EMU according to another embodiment of the present disclosure;
Figure 5 illustrates an operation status schematic of the system for emergency traction of an EMU according to another embodiment of the present disclosure;
Figure 6 illustrates an operation status schematic of the system for emergency traction of an EMU according to another embodiment of the present disclosure; and
Figure 7 illustrates an operation status schematic of the system for emergency traction of an EMU according to another embodiment of the present disclosure.

### DETAILED DESCRIPTION OF EMBODIMENTS

Technical solutions of the embodiments of the present disclosure will be illustrated completely and clearly with the following drawings of the embodiments of the disclosure. Apparently, the described embodiments are merely a few rather than all of the embodiments of the present disclosure. All other embodiments obtained by persons of ordinary skill in the art based on the embodiments of the present disclosure without creative efforts shall fall within the protection scope of the present disclosure.

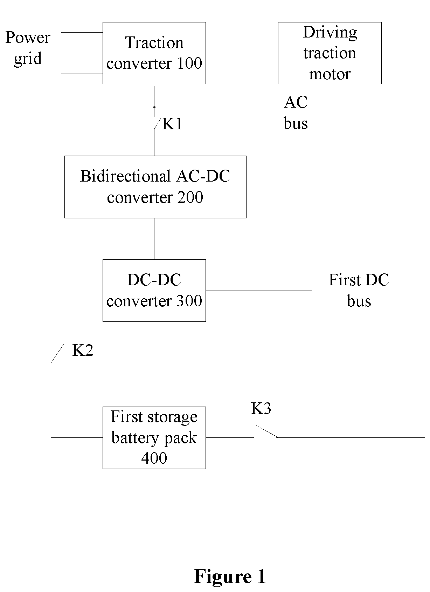

In view of the problem that an EMU need emergency traction to operate after a power grid is off, a system for emergency traction of an EMU is provided in the present disclosure. As illustrated in Figure 1, the system for emergency traction of an EMU includes: a traction converter 100, a bidirectional AC-DC converter 200, a DC-DC converter 300, a first storage battery pack 400, a first control switch K1, a second control switch K2, and a third control switch K3.

An power input terminal of the traction converter 100 is connected with a power grid, a first output terminal of the traction converter 100 is connected with a driving traction motor of the EMU, a second output terminal of the traction converter 100 is connected with an AC bus of the EMU and a first terminal of the bidirectional AC-DC converter 200. When the power grid is on, the traction converter 100 collects electric energy from the power grid, converts the collected electric energy into electric energy required by the EMU, and outputs the converted electric energy to the traction motor and the AC bus of the EMU. When the power grid is off and no electric energy can be collected from the power grid, a DC bus (denoted as a second DC bus) in the traction converter 100 can be provided with electricity by the first storage battery pack 400 under control of the third control switch K3, and the traction converter 100 converts the collected electricity into AC power required by the traction motor.

The first terminal of the bidirectional AC-DC converter 200 is connected with the AC bus of the EMU and the second output terminal of the traction converter 100, and a second terminal of the bidirectional AC-DC converter 200 is connected with the first storage battery pack 400 and an input terminal of the DC-DC converter 300. The AC bus of the EMU is connected with AC electric equipment including at least a cooling fan, a cooling pump, a main air compressor, and an air conditioning unit.

The input terminal of the DC-DC converter 300 is connected with the second terminal of the bidirectional AC-DC converter 200, and an output terminal of the DC-DC converter 300 is connected with a first DC bus of the EMU, where DC electric equipment of the EMU is connected with the first DC bus to collect DC power through the first DC bus. In this solution, the DC-DC converter 300 is provided with DC power from the second terminal of the bidirectional AC-DC converter 200, and performs DC-DC conversion on the collected DC power to convert it into target DC power. For example, in this solution, a DC voltage output by the DC-DC converter 300 is 110V DC.

A power interface of the first storage battery pack 400 is connected with the second terminal of the bidirectional AC-DC converter 200 and the second DC bus in the traction converter 100. The first storage battery pack 400 is charged or discharged through the power interface. Specifically, when the power grid is on, an AC voltage on the AC bus of the EMU is AC380V At this time, the bidirectional AC-DC converter 200 converts the AC voltage on the AC bus into a DC voltage, to charge the first storage battery pack 400. When the power grid is off, the AC voltage on the AC bus of the EMU is 0. At this time, the first storage battery pack 400 is discharged, a DC voltage therefrom is converted into an AC voltage by the bidirectional AC-DC converter 200 and the AC voltage is released to the AC bus of the EMU

The first control switch K1 is arranged between the bidirectional AC-DC converter 200 and the AC bus L1, and is configured to realize an on-state between the bidirectional AC-DC converter 200 and the AC bus L1. When the first control switch K1 is turned on, the bidirectional AC-DC converter 200 and the AC bus L1 are connected to each other. When the first control switch K1 is turned off, the bidirectional AC-DC converter 200 and the AC bus L1 are disconnected from each other, and there is no current transmission between them.

The second control switch K2 is arranged between the first storage battery pack 400 and the bidirectional AC-DC converter 200, and is configured to realize an on-state between the first storage battery pack 400 and the bidirectional AC-DC converter 200. When the second control switch K2 is turned on, the first storage battery pack 400 and the bidirectional AC-DC converter 200 are connected to each other. When the second control switch K2 is turned off, the first storage battery pack 400 and the bidirectional AC-DC converter 200 are disconnected from each other, and there is no current transmission between them. And, when the first storage battery pack 400 is fully charged and there is no demand for electric energy output, the second control switch K2 is in an off-state.

The third control switch K3 is arranged between the first storage battery pack 400 and the second DC bus in the traction converter 100, and is configured to realize an on-state between the first storage battery pack 400 and the traction converter 100. When the third control switch K3 is turned on, the first storage battery pack 400 and the second DC bus in the traction converter 100 are connected to each other. An output current of the first storage battery pack 400 flows into the second DC bus in the traction converter 100, and is inverted into an AC by the traction converter 100, and the AC as inverted is sent to the driving traction motor. When the third control switch K3 is turned off, the first storage battery pack 400 and the second DC bus of the traction converter 100 are disconnected from each other, and the output current of the first storage battery pack 400 cannot flow into the second DC bus in the traction converter 100.

It can be seen from the above solutions disclosed in the above embodiments of the present disclosure that when the power grid is working normally and the traction motor can be powered by the grid, the power grid provides AC power to the AC bus of the traction motor and the EMU via the traction converter. In this case, the power grid is used as a traction power source, and also supplies power to the AC electric equipment on the AC bus. The bidirectional AC-DC converter collects electric energy from the AC bus, converts the collected electric energy into DC power, and loads it onto the first DC bus of the EMU to provide power for the DC electric equipment of the EMU. When the first storage battery pack needs to be charged, the second control switch K2 is turned on so that the bidirectional AC-DC converter charges the storage battery pack. When the power grid is off or the power cannot be collected from the power grid due to other faults and the EMU has a traction demand, the first storage battery pack is controlled to discharge by controlling on-off states of the first control switch, the second control switch, and the third control switch. The first DC bus is powered through the DC-DC converter 300, and the AC bus is powered through the bidirectional AC-DC converter. At the same time, the first storage battery pack also releases electrical energy through the third control switch to the second DC bus of the traction converter, to supply power to the driving traction motor through the traction converter. It can be seen that in the technical solutions disclosed in the embodiments of the present disclosure, when the power supply of the power grid fails, operation of the EMU is guaranteed.

In the technical solutions disclosed in the embodiments of the present application, in order to facilitate the control of the first control switch K1, the second control switch K2, and the third control switch K3, a switch controller may also be provided. The switch controller is configured to output a control signal matching an obtained switch control instruction to the first control switch, the second control switch, and the third control switch. The control signal is used for controlling on-off states of the first control switch, the second control switch, and the third control switch.

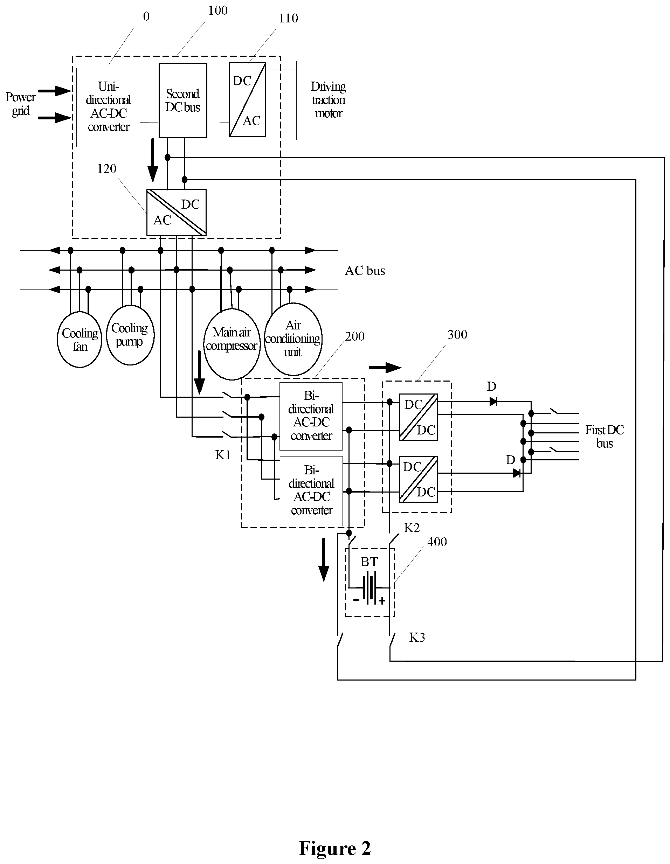

Specifically, in the technical solutions disclosed in the embodiments of the present application, a specific working process of the switch controller is described in detail in conjunction with Figures 2 to 6.

As illustrated in Figure 2, a black arrow in Figure 2 indicates a direction of current. When the power grid is on, the first control switch K1 and the second control switch K2 are controlled to turn on, and the third control switch K3 is controlled to turn off. In this case, a current from the power grid is processed by the traction converter 100, to supply power to the drive traction motor, the AC bus of the EMU, and the bidirectional AC-DC converter 200.

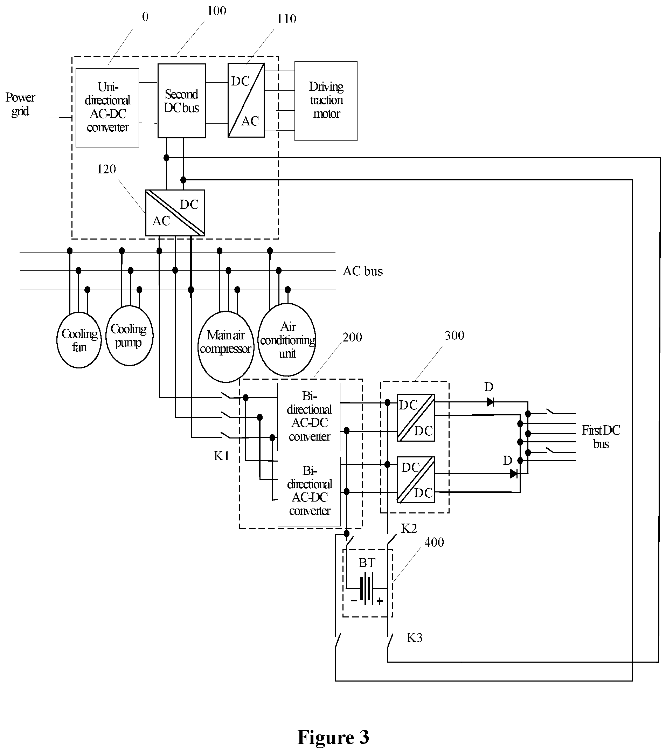

When the power grid is off, whether a switch control instruction is obtained is determine. If not, the first control switch K1, the second control switch K2 and the third control switch K3 to are controlled to turn off. As illustrated in Figure 3, there is no current in the system for emergency traction of an EMU in this case.

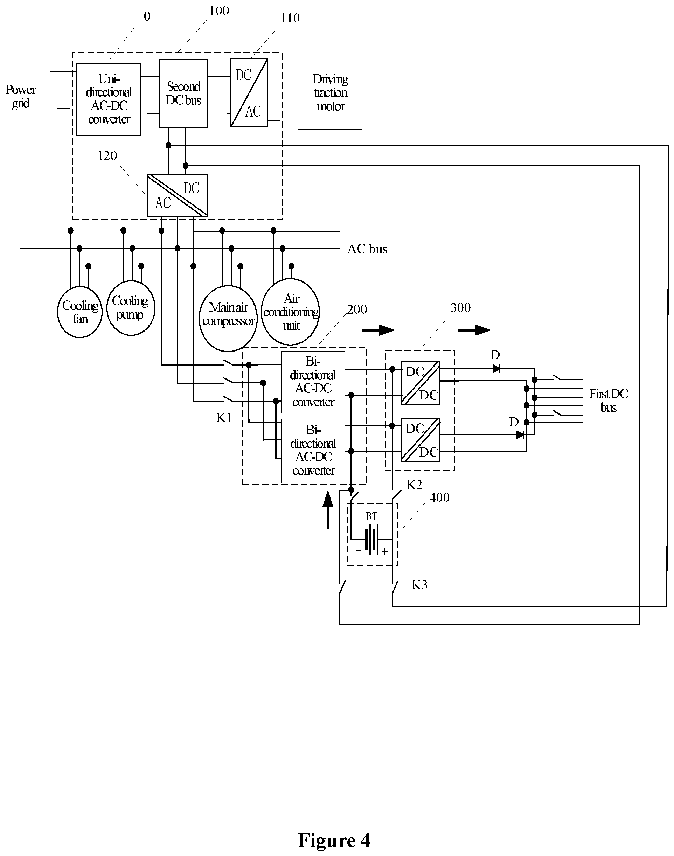

If the switch control instruction is obtained, an instruction identifier of the switch control instruction is determined. When the instruction identifier of the switch control instruction is a first identifier, the first control switch K1 and the third control K3 are kept off, and the second control switch K2 is switched to an on-state. As illustrated in Figure 4, at this time, the condition of currents in the system for emergency traction of an EMU is as follows: the first storage battery pack 400 releases a current, and the released current flows into the DC-DC converter 300 through the second control switch K2, and flows into the first DC bus after being converted by the DC-DC converter 300.

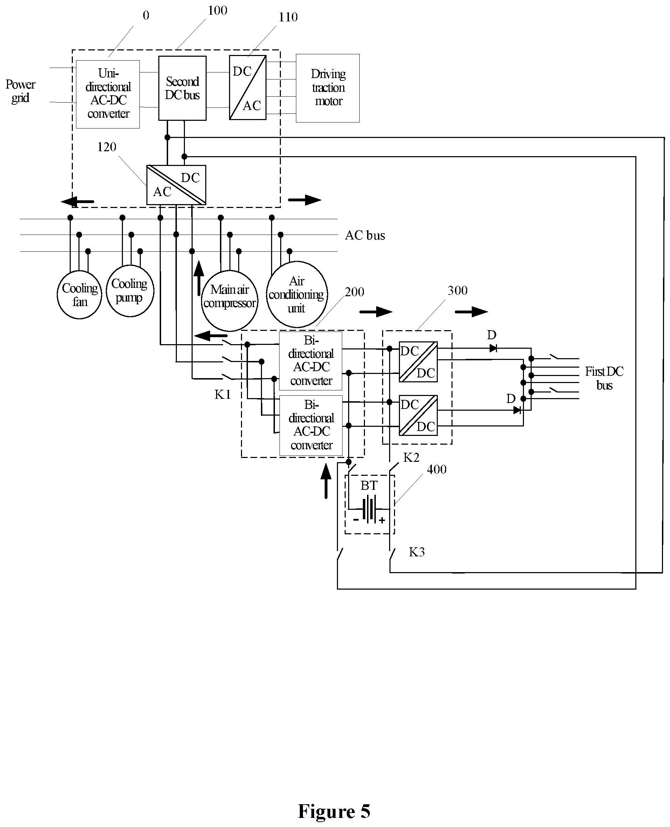

When the instruction identifier of the switch control instruction is a second identifier, the third control switch K3 is kept off, the first control switch K1 and the second control switch K2 are switched to the on-state. As shown in Figure 5, at this time, the condition of currents in the system for emergency traction of an EMU is as follows: the first storage battery pack 400 releases a current, and the released current flows into the bidirectional AC-DC converter 200 and the DC-DC converter 300 through the second control switch K2; the first storage battery pack 400 releases a current, and the released current flows into the AC bus of the EMU after being converted by the bidirectional AC-DC converter 200; and the first storage battery pack 400 releases a current, and the released current flows into the first DC bus after being converted by the DC-DC converter 300.

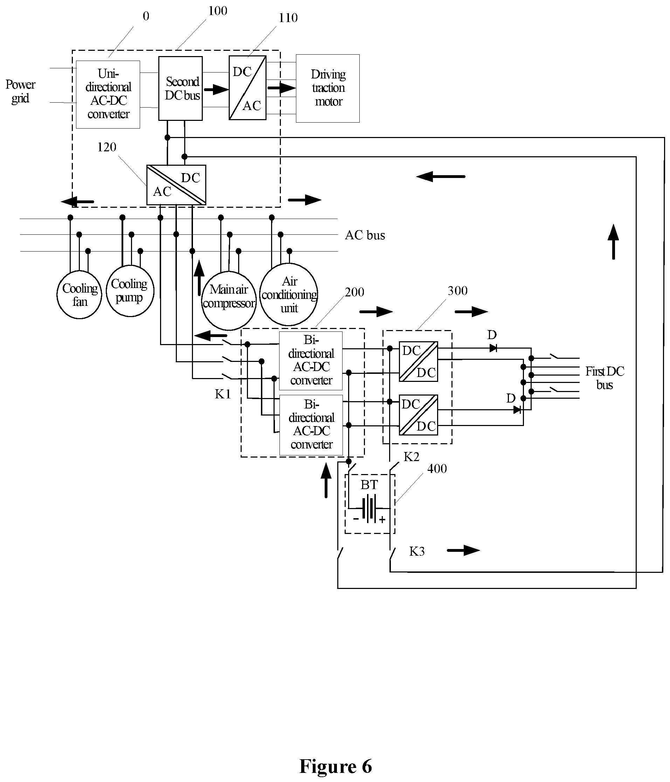

When the instruction identifier of the switch control instruction is a third identifier, the first control switch K1, the second control switch K2, and the third control switch K3 are switched to the on-state. As illustrated in Figure 6, at this time, the condition of currents in the system for emergency traction of an EMU is as follows: the first storage battery pack 400 releases a current, and the released current flows into the bidirectional AC-DC converter 200, the DC-DC converter 300 and the traction converter 100 through the second control switch K2; the first storage battery pack 400 releases a current, and the released current flows into the AC bus of the EMU after being converted by the bidirectional AC-DC converter 200; the first storage battery pack 400 releases a current, and the released current flows into the first DC bus after being converted by the DC-DC converter 300; and the first storage battery pack 400 releases a current, and the released current is converted by the traction converter 100 to supply power to the driving traction motor.

In the solution, the first control switch K1, the second control switch K2, and the third control switch K3 can be controlled as a whole through the switch control instruction.

For the case of as-a-whole control, the switch controller may be equipped with multiple operation keys, and each operation key directly controls the first control switch, the second control switch and the third control switch to enter a specific operation mode. For example, a first operation key can directly control the first control switch and the third control switch to turn off, and control the second control switch to turn on; a second operation key can control the third control switch to turn off, and switch the first control switch and the second control switch to the on-state; and a third operation key can directly switch the first control switch, the second control switch and the third control switch to the on-state.

In addition to the as-a-whole control of the first control switch K1, the second control switch K2, and the third control switch K3 by using the switch control instruction, the switch controller may also implement separate control on the first control switch K1, the second control switch K2, and the third control switch K3 through the switch control instruction. In this case, the switch controller is specifically configured to:
control the first control switch K1 and the second control switch K2 to turn on, and control the third control switch K3 to turn off, in a case that the power grid is on; and
determine, in a case that the power grid is off, whether a switch control instruction is obtained; if not, control the first control switch K1, the second control switch K2 and the third control switch K3 to turn off; determine, in a case that the switch control instruction is obtained, a control switch corresponding to the switch control instruction, and control the corresponding control switch to turn on or off according to the switch control instruction.

For the case of separate control, the switch controller may be equipped with multiple operation keys, and each operation key can control one control switch. For example, the first operation key is configured to control the on-off state of the first control switch K1, the second operation key is configured to control the on-off state of the second control switch K2, and the third operation key is configured to control the on-off state of the third control switch K3.

In order to keep the first storage battery pack in a fully charged state, in addition to controlling the operation state of the second control switch based on the status of the power grid and the switch control instruction, the switch controller may also control the on-off state of the second control switch K2 based on a power state of the first storage battery pack automatically. Specifically, in this case, the switch controller is also configured to: control, in a case that the power grid is on and a voltage of the first storage battery pack is detected to be lower than a set threshold, the second control switch to turn on, to charge the first storage battery pack; and control the second control switch to turn off when the first storage battery pack is fully charged.

In order to facilitate an EMU crew to control the first control switch, the second control switch and the third control switch, in the technical solutions disclosed in the above embodiments of the present disclosure, the switch controller is arranged on a control platform of the EMU. In the technical solutions disclosed in the embodiments of the present application, in order for a user to conveniently input an operation instruction, a touch screen may also be provided. The touch screen is provided at the control platform of the EMU and is configured to send the switch control instruction to the switch controller. The operation keys of the switch controller described above may be set on the touch screen.

In the technical solutions disclosed in the above embodiments of the present disclosure, a specific structure of the traction converter 100 can be set according to a user requirement. For example, as illustrated in Figure 2, in the technical solutions disclosed in the embodiments of the present disclosure, the traction converter 100 may be composed of a unidirectional AC-DC converter 0, a first DC-AC converter 110 and a second DC-AC converter 120, where input terminals of the first DC-AC converter 110 and the second DC-AC converter 120 are connected with the unidirectional AC-DC converter 0 through the second DC bus. A terminal of the second DC bus connected with the unidirectional AC-DC converter 0 serves as the power input terminal of the traction converter 100. An output terminal of the first DC-AC converter 110 serves as the first output terminal of the traction converter 100, and an output terminal of the second DC-AC converter 120 serves as the second output terminal of the traction converter 100. The first DC-AC converter 110 is configured to convert the DC power on the second DC bus into AC power suitable for the driving traction motor, and the second DC-AC converter 120 is configured to convert the DC power on the second DC bus into AC power suitable for the AC bus.

In the technical solutions disclosed in the embodiments of the present disclosure, at least one bidirectional charging module is configured in the bidirectional AC-DC converter 200, and a first terminal of the bidirectional charging module serves as the first terminal of the bidirectional AC-DC converter 200, a second terminal of the bidirectional charging module serves as the second terminal of the bidirectional AC-DC converter 200, and the bidirectional charging module may be a bidirectional AC-DC converter. For example, as illustrated in Figures 2-7, the bidirectional AC-DC converter 200 is composed of two bidirectional AC-DC converters.

In the technical solutions disclosed in the embodiments of the present disclosure, at least one DC-DC conversion module is configured in the DC-DC converter 300. For example, as illustrated in Figure 2, the DC-DC converter 300 is composed of two DC-DC converters. An input terminal of the DC-DC conversion module serves as the input terminal of the DC-DC converter 300, and an output terminal of the DC-DC conversion module serves as the output terminal of the DC-DC converter 300.

The number of bidirectional charging modules configured in the bidirectional AC-DC converter 200 may be the same as the number of DC-DC conversion modules configured in the DC-DC converter 300. In this case, there is a one-to-one correspondence between the bidirectional charging modules and the DC-DC conversion modules, and the second terminal of each bidirectional charging module is connected with the input terminal of a corresponding DC-DC conversion module.

Regarding the storage battery pack, the storage battery pack 400 may be composed of no less than one battery, and the battery may be a lithium battery or any other type of energy storage battery.

Further, in the technical solutions disclosed in the embodiments of the present disclosure, in order to charge the storage battery pack, a photovoltaic power supply system may also be provided. In the photovoltaic power supply system, a solar panel can be installed on a top or side wall of the EMU, and the storage battery pack can be charged by the photovoltaic system. Specifically, charging and discharging of the storage battery pack can be controlled by a controller. The controller may be configured to determine whether the storage battery pack needs to be charged based on a voltage of the storage battery pack, if so, determine whether a voltage value of the storage battery pack is less than a first preset value. If the power grid is suddenly cut off in a case that the voltage value of the storage battery pack is less than the first preset value and, electric energy stored in the storage battery pack may not be enough, and the storage battery pack needs to be quickly charged. Therefore, the bidirectional AC-DC converter 200 and the photovoltaic power supply system are controlled to charge the storage battery pack at the same time. The storage battery pack is charged until the voltage of the storage battery pack reaches a second preset value. When the voltage of the storage battery pack is greater than or equal to the second preset value and the storage battery pack needs to be charged, the storage battery pack is charged by the photovoltaic power supply system if the photovoltaic power supply system has power output. And if the photovoltaic power supply system has no power output, the bidirectional AC-DC converter 200 and the photovoltaic power supply system are controlled to simultaneously charge the storage battery pack.

In the technical solutions disclosed in the embodiments of the present disclosure, a rated output voltage of the storage battery pack 400 may be set according to a user requirement. For example, in the technical solutions disclosed in the embodiments of the present disclosure, the rated output voltage of the storage battery pack 400 may be 635V DC.

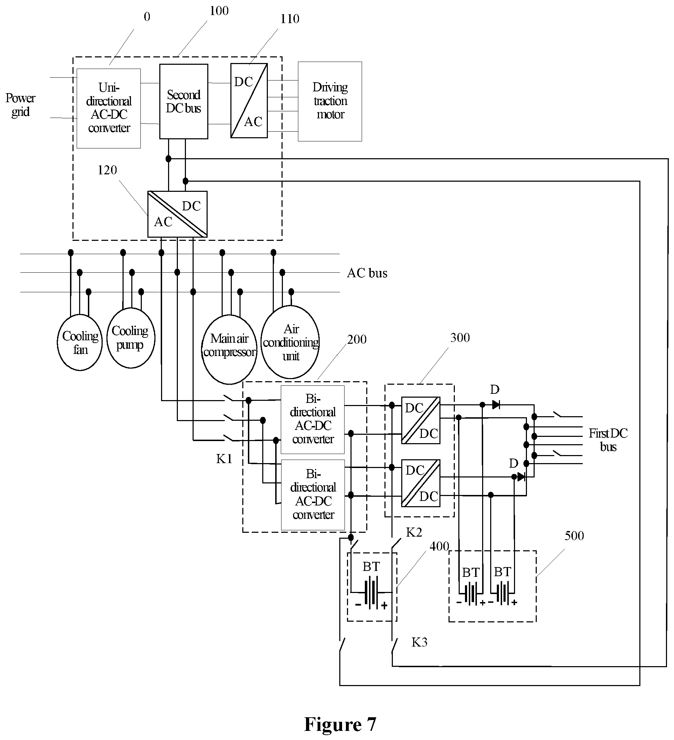

Further, as illustrated in Figure 7, the system for emergency traction of an EMU disclosed in the above embodiments of the present disclosure may also be provided with a second storage battery pack 500, and a rated output voltage of the second storage battery pack 500 is lower than the rated output voltage of the first storage battery pack, which, for example, may be 110VDC.

Further, as illustrated in Figures 2-7, in order to prevent reverse charging by the voltage on the first DC bus, a diode is provided between the output terminal of the DC-DC converter 300 and the first DC bus of the EMU

The above embodiments in this specification are described in a progressive manner. Each of the embodiments is mainly focused on describing its differences from other embodiments, and references may be made among these embodiments with respect to the same or similar portions among these embodiments. For the device disclosed in the embodiment, since it corresponds to the method disclosed in the embodiment, the description is relatively simple, and relevant parts can be referred to the description of the method.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A system for emergency traction of an electric multiple unit (EMU), comprising:
a traction converter, wherein an power input terminal of the traction converter is connected with a power grid, a first output terminal of the traction converter is connected with a driving traction motor of the EMU, a second output terminal of the traction converter is connected with a first terminal of a bidirectional alternating current to direct current (AC-DC) converter and an alternating current (AC) bus of the EMU;
the bidirectional AC-DC converter, wherein a second terminal of the bidirectional AC-DC converter is connected with a power interface of a first storage battery pack and an input terminal of a direct current to direct current (DC-DC) converter;
the DC-DC converter, wherein an output terminal of the DC-DC converter is connected with a first direct current (DC) bus of the EMU;
the first storage battery pack, wherein the power interface of the first storage battery pack is connected with a second DC bus in the traction converter through a third control switch;
a first control switch arranged between the bidirectional AC-DC converter and the AC bus;
a second control switch arranged between the first storage battery pack and the input terminal of the DC-DC converter; and
the third control switch, wherein the third control switch is arranged between the first storage battery pack and the second DC bus in the traction converter.

2. The system for emergency traction of an EMU according to claim 1, further comprising:
a switch controller configured to output a control signal matching an obtained switch control instruction to the first control switch, the second control switch, and the third control switch, wherein the control signal is used for controlling on-off states of the first control switch, the second control switch, and the third control switch.

3. The system for emergency traction of an EMU according to claim 2, wherein the switch controller is configured to:
control the first control switch and the second control switch to turn on, and control the third control switch to turn off, in a case that the power grid is on;
determine, in a case that the power grid is off, whether a switch control instruction is obtained; control the first control switch, the second control switch and the third control switch to turn off, in a case that no switch control instruction is obtained; determine an instruction identifier of the switch control instruction, in a case that the switch control instruction is obtained; keep the first control switch and the third control switch off, and switch the second control switch to an on-state, in a case that the instruction identifier of the switch control instruction is a first identifier; keep the third control switch off, and switch the first control switch and the second control switch to an on-state, in a case that the instruction identifier of the switch control instruction is a second identifier; and switch the first control switch, the second control switch, and the third control switch to an on-state, in a case that the instruction identifier of the switch control instruction is a third identifier.

4. The system for emergency traction of an EMU according to claim 2, wherein the switch controller is configured to:
control the first control switch and the second control switch to turn on, and control the third control switch to turn off, in a case that the power grid is on;
determine, in a case that the power grid is off, whether a switch control instruction is obtained; control the first control switch, the second control switch and the third control switch to turn off, in a case that no switch control instruction is obtained; and determine, in a case that the switch control instruction is obtained, a control switch corresponding to the switch control instruction, and control the corresponding control switch to turn on or off according to the switch control instruction.

5. The system for emergency traction of an EMU according to claim 1, wherein the switch controller is arranged at a control platform of the EMU

6. The system for emergency traction of an EMU according to claim 5, further comprising:
a touch screen, arranged at the control platform of the EMU, and configured to send the switch control instruction to the switch controller.

7. The system for emergency traction of an EMU according to claim 1, further comprising a second storage battery pack, wherein a rated output voltage of the second storage battery pack is lower than a rated output voltage of the first storage battery pack.

8. The system for emergency traction of an EMU according to claim 7, wherein the rated voltage of the first storage battery pack is 635V DC, and the rated voltage of the second storage battery pack is 110VDC.
